# EUROPÄISCHE PATENTSCHRIFT

(11) **EP 1 159 705 B1**
(45) Veröffentlichungstag und Bekanntmachung des Hinweises auf die Patenterteilung: **11.09.2002**
(21) Anmeldenummer: 00908959.0
(22) Anmeldetag: 01.02.2000
(51) Int. Cl.: G06K 9/66, B07C 3/14

(54) **VERFAHREN ZUM LESEN VON DOKUMENTEINTRAGUNGEN UND ADRESSEN**
METHOD FOR READING DOCUMENT ENTRIES AND ADDRESSES
PROCEDE DE LECTURE D'ENTREES DE DOCUMENTS ET D'ADRESSES

(30) Priorität: 12.02.1999 DE 19905938
(43) Veröffentlichungstag der Anmeldung: 05.12.2001
(73) Patentinhaber: Siemens Dematic AG, 90475 Nürnberg (DE)
(72) Erfinder: SCHÄFER, Hartmut, D-78467 Konstanz (DE); BAYER, Thomas, D-78315 Radolfzell (DE)
(74) Vertreter: Berg, Peter
(86) Internationale Anmeldenummer: DE0000269
(87) Internationale Veröffentlichungsnummer: WO00048119

(56) Entgegenhaltungen:
- US-A- 4 724 542
- US-A- 5 159 667

## Beschreibung

Die Erfindung betrifft ein Verfahren zum Lesen von Dokumenteintragungen und Adressen nach dem Oberbegriff des Anspruches 1.

Lesesysteme haben die Aufgabe, in einem speziellen Anwendungskontext Textbestandteile, die auch Zahlen enthalten können, auf einem Dokument oder einer Sendung in den elektronischen äquivalenten Text zu wandeln und die in dieser Anwendung wichtigen spezifischen Informationen abzuleiten. Beispiele für Lesesysteme sind Adreßleser, deren Aufgabe es ist, aus den auf postalischen Sendungen, wie Briefen oder Paketen, befindlichen Textbestandteilen, speziell aus dem Bereich der Empfängeradresse, die Schriftzeichen und Zahlen zu erkennen und aus deren Menge den Verteilcode abzuleiten.

Dazu werden eine Reihe von Erkennungsverfahren eingesetzt, die nach der Abtastung des Dokuments oder der Sendung das daraus resultierende elektronische Bild Schritt für Schritt in elektronischen Text wandeln. Die Teilschritte sind im einzelnen Layoutanalyse (Dokumenttyperkennung, Bestimmung der interessierenden Gebiete/Region of Interest (ROI), Segmentierung des Textbildes in Zeilen, Wörter und/oder Zeichen, Schriftzeichenklassifikation oder Erkennung gebundener Handschrift, und abschließende Interpretation der Textbestandteile. Jeder Erkennungsschritt besitzt einen definierten Parametersatz, der die Lösung der Teilerkennungsaufgabe bestimmt.

Die Erkennungsschritte eines Lesesystems und damit das Lesesystem selbst werden zur Lösung einer vorgegebenen Leseaufgabe auf deren speziellen Eigenschaften adaptiert, um ein möglichst gutes Leseergebnis zu erzielen. Dazu werden Beispieldokumente und -sendungen zusammengestellt (Stichproben), die die Anforderungen der Leseaufgabe möglichst gut beschreiben. Zu jedem Dokument wird die korrekte Lösung (Label) in Form des zu extrahierenden Textes gestellt, so daß eine Datenbasis von Paaren von Dokumentbildern und dem Sollergebnis (Label) aufgebaut wird. Zu diesem Sollergebnis gehören auch die Ergebnisse der Leseteilschritte.

Die Parameter der einzelnen Erkennungsschritte werden nach dem Stand der Technik vor dem eigentlichen Lesebetrieb so eingestellt, daß die Leseaufgabe, repräsentiert durch die gelabelte Stichprobe, möglichst gut gelöst wird. Dieser als Adaption bezeichnete Prozeß ist iterativ.

Folgende 3 Schritte werden zyklisch so lange durchlaufen, bis die Erkennungsleistung ausreichend ist:
Wählen einer Parametereinstellung, Test des Lesesystems anhand der Stichprobenbilder, Evaluierung der Ergebnisse anhand der gegebenen Sollergebnisse bzw. Label.

Nach der Adaption ist das Lesesystem für die Bearbeitung der Elemente der Stichprobe optimiert. Die Zusammensetzung der Stichprobe bestimmt folglich zu einem hohen Grad die Erkennungsleistung des Lesesystems, insbesondere da die ermittelte Parameterkonfiguration der Erkennungsschritte während des Betriebs für jedes ausgelieferte Lesesystem beibehalten wird. Da die tatsächliche Verteilung der zu lesenden Dokumente für einen speziellen Einsatzort (site) nicht vorhergesehen werden kann, ist das Lesesystem nicht optimal an die ortsspezifische Leseaufgabe adaptiert. Insbesondere können örtliche Besonderheiten und zeitliche Änderungen der Lesegutverteilung nicht vom Lesesystem berücksichtigt werden.

Zur Zeit im Einsatz befindliche Lesesysteme besitzen nicht die Eigenschaft, sich anhand der tatsächlich bearbeiteten Dokumente während des Betriebs dynamisch an die vorhandenen Eigenschaften zu adaptieren. Stets werden im Vorfeld, wie beschrieben, die einzelnen Erkennungsschritte einmal an vorgegebenen statischen Stichproben adaptiert, und die daraus abgeleiteten Parametersätze in der Anwendung konstant gehalten. Dazu gibt es eine Vielzahl von Verfahren zur Schriftzeichenerkennung, die mittels einer vorgegebenen gelabelten Lernstichprobe an die zu lösende Aufgabe adaptiert werden. [Schürmann, Jürgen: Pattern Classification, Wiley Interscience, 1996]. Für Verfahren zur Erkennung gebundener Handschrift sind ebenfalls Adaptionsalgorithmen bekannt [Rabiner, Lawrence R.: A Tutorial on Hidden Markov Models and Selected Applications in Speech Recognition Proceedings of the IEEE, Vol. 77, No.2, February 1989], ebenso wie zur Klassifikation von Formulartypen. Neben diesen Optimierungsansätzen, die ein Klassifikationsproblem lösen, sind Verfahren bekannt, die die Parameter durch "gezieltes Ausprobieren" optimieren, wie Evolutionäre Algorithmen, Simulated Annealing, o.ä. [Rumelhart, D.E. et al.: Learning Internal Representation by Error Propagation, Parallel Distributed Processing, Vol.1, MIT Press, Cambridge, MA, 1986/Press, Will H. et al.: Numerical Reciped in C, Chapter 10, Minimization or Maximization of Functions, Cambridge University Press, 1992]. Anwendungen dazu sind Topologieoptimierung neuronaler Netze, die beispielsweise zur Schriftzeichenklassifikation verwendet werden. Beim Einsatz dieser Verfahren wird jedoch stets eine vorab definierte Stichprobe verwendet, aus der die optimierten Parametersätze berechnet werden, die in der Anwendung nicht mehr verändert werden.

Der im Anspruch 1 angegebenen Erfindung liegt die Aufgabe zugrunde, ein Verfahren zum Lesen von Dokumenteintragungen und Adressen zu schaffen, das eine automatische Adaption des automatischen Lesers an aktuelle Bedingungen und Zusammensetzungen des Lesegutes gestattet.

Aus der Druckschrift US-A-4 724 542 ist zur Lösung dieser Aufgabe bekannt, während des Lesebetriebes bei eindeutig automatisch gelesenen Informationen von ausgewählten Bildern (Unterschriften) die den Bilddaten des jeweiligen Bildes zugeordneten Leseergebnisse für eine aktuelle Stichprobe (als Bezugsunterschriften) zu speichern und mit der aktuellen Stichprobe den automatischen Leser neu zu adaptieren.

Der Erfindung liegt der Gedanke zugrunde, den automatischen Leser nicht nur wie bisher in einer vorgelagerten Phase anhand einer ausgewählten Stichprobe zu adaptieren, sondern während des laufenden Lesebetriebes eine neue Stichprobe zu generieren bzw. die ursprüngliche Stichprobe zu aktualisieren und die Parameter des Lesers automatisch mit dieser Stichprobe neu einzustellen. Dadurch erfolgt eine ständige und automatische Anpassung des Lesers an unterschiedliche örtliche Eigenschaften des Lesegutes bzw. eine sich ändernde Gutzusammensetzung. Zur Generierung aktueller Stichprobenbestandteile werden bei eindeutig automatisch gelesenen Informationen von Bildern ausgewählten Lesegutes die den Bilddaten zugeordneten Lese- und Zwischenergebnisse gespeichert. Wurde die gewünschte Information mithilfe der Videocodierung ermittelt, weil mit dem automatischen Leser kein eindeutiges Ergebnis erzielt wurde, so wird das Bild unter Einbeziehung des Ergebnisses der Videocodierung in einer zweiten Lesephase noch einmal automatisch gelesen. Kann dieses zweite Lesen mit einem eindeutigen Leseergebnis abgeschlossen werden, so werden die nun erzielten Lese- und Zwischenergebnisse den zugehörigen Bilddaten zugeordnet und ebenfalls für die aktuelle Stichprobe gespeichert.

Ist der zweite Lesevorgang nicht erfolgreich, so wird dieses Abbild der zu lesenden Gutoberfläche mit den Ergebnissen nicht in die Stichprobe aufgenommen. Mit der aktuellen Stichprobe wird der automatische Leser dann neu adaptiert.

Vorteilhafte Ausgestaltungen der Erfindung sind in den Unteransprüchen dargestellt.

So ist es vorteilhaft, den zweiten Lesevorgang ohne Zeitbeschränkungen durchzuführen. Dadurch können Abbildungen erfolgreich gelesen und in die Stichprobe aufgenommen werden, die beim ersten Leser nur wegen des Überschreitens des Zeitlimits zurückgewiesen wurden. Abbilder, die aufgrund von Inkonsistenzen, z.B. infolge Fehleingaben beim Videocodieren oder infolge von Falschadressierungen, zu Fehladaptionen führen könnten, werden vorteilhaft nicht in die Stichprobe übernommen.

Um den Adaptionsaufwand zu reduzieren, ist es günstig, für jedes mithilfe des Videocodierens erfolgreich gelesene Bild die Zwischenergebnisse beim ersten automatischen Lesen mit den Zwischenergebnissen beim zweiten automatischen Lesen zu vergleichen und signifikante Abweichungen als Auswertefehler in den Zwischenschritten beim ersten automatischen Lesen statistisch zu erfassen. Es werden dann nur die Zwischenschritte neu adaptiert, deren Fehlerhäufigkeit während einer bestimmten Zeitspanne über einem festgelegten Wert liegt.

Weiterhin ist es vorteilhaft, die Leserate beim ersten automatischen Lesen zu überwachen. Nur wenn diese über einen festgelegten Zeitraum unterhalb eines Schwellwertes liegt, werden der Leser oder die Zwischenschritte mit der aktuellen Stichprobe neu adaptiert.

In einer weiteren vorteilhaften Ausgestaltung wird über eine Stichprobe die Leserate an einem automatischen Leser gleicher Funktionalität mit den vorherigen und den neu adaptierten Parametern ermittelt. Nur bei einer Verbesserung durch die neu adaptierten Parameter wird der automatische Leser neu initialisiert. Damit wird sichergestellt, daß Neuinitialisierungen nur im notwendigen Maße bei Verbesserungen durchgeführt werden.

Ob jedes neu gelesene Bild mit eindeutig gelesener Information oder nur jedes x-te Bild in die Stichprobe aufgenommen wird, hängt davon ab, wie hoch der Anfall der zu lesenden Güter ist, wieviel Bilder die Stichprobe umfassen soll und wie groß die die Leseergebnisse beeinflussenden Veränderungen in den Bildern sind.

Günstig ist es auch, wenn die Stichprobe aus nur automatisch gelesenen und videocodierten Bildern im festgelegten Verhältnis zusammengesetzt ist. Damit ist sichergestellt, daß die die Neuadaption besonders beeinflussenden kritischen Fälle mit Videocodierung ausreichend berücksichtigt werden. Die Neuadaption kann sowohl mit aktualisierten Stichproben, bei denen die alten Elemente durch neue ersetzt werden als auch mit neuen Stichproben durchgeführt werden. Die Auswahl hängt von den konkreten Bedingungen, wie z.B. Gutanfall in der Zeiteinheit, Veränderungsgeschwindigkeit der Leserate, ab.

Anschließend wird die Erfindung in einem Ausführungsbeispiel zum Adreßlesen anhand der Zeichnung näher erläutert. Dabei zeigen
- FIG 1: eine Blockstruktur des Lesers mit Schnittstellen zum Adaptionsprozeß, Monitorprozeß und Stichprobengenerator
- FIG 2: eine Ablaufstruktur des Monitorprozesses
- FIG 3: eine Ablaufstruktur des Stichprobengenerators
- FIG 4: eine Ablaufstruktur des Adaptionsprozesses

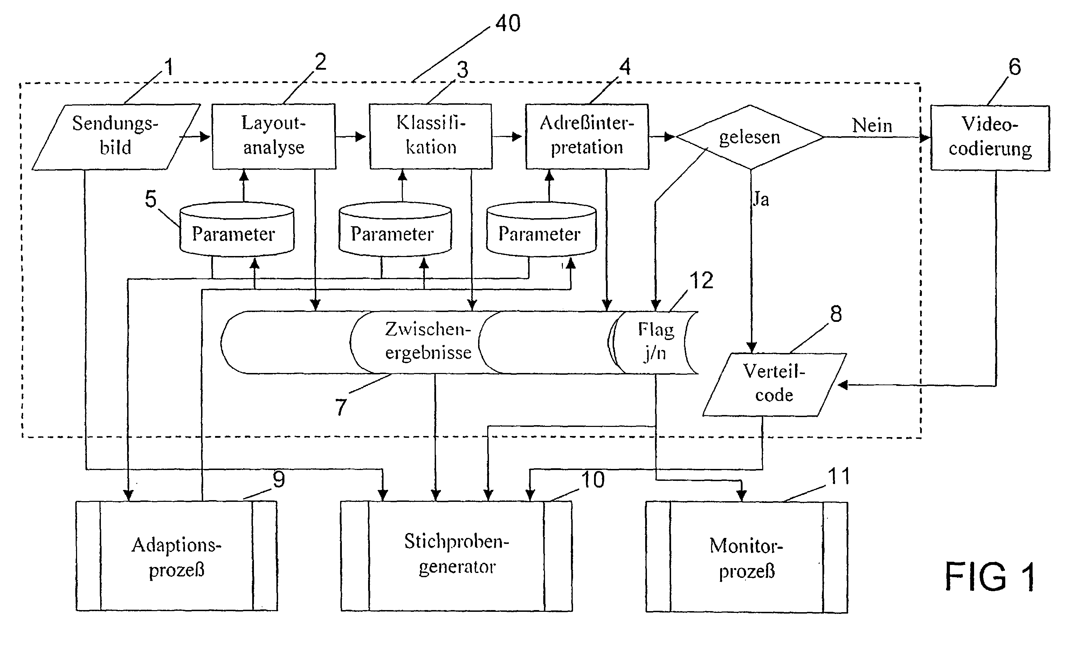

Beim Adreßlesen hat der Leser 40 gemäß FIG 1 die Aufgabe, auf einem Sendungsbild 1 die Anschrift zu finden, die Schriftzeichen der Adresse zu decodieren und die für die Sortierung relevanten Informationen aus ihr zu extrahieren. Wenn der Leser 40 die Verteilinformation nicht automatisch ermitteln kann (Rückweisung), wird das Bild 1 der Sendung an einen Videocodierplatz 6 gesendet, an dem ein Bearbeiter diese Daten manuell eingibt, beispielsweise die Postleitzahl.

Die für die Verteilaufgabe relevanten Informationen umfassen in der Regel die Postleitzahl, den Ort, die Straße mit Hausnummer und teilweise den Namen und Vornamen des Adressaten. Welche Teile der Anschrift für die Sortierung relevant sind, wird von der konkreten Anwendung definiert.

Der Leser 40 gliedert sich in die Teilverfahren Layoutanalyse 2 (Dokumenttyperkennung, ROI-Lokalisierung, Segmentierung), Erkennung von Einzelzeichen und gebundener Handschrift 3 und die Adreßinterpretation 4. Zur Lösung einer Leseaufgabe werden diese Teilverfahren sequentiell abgearbeitet.

Jedes Teilverfahren besitzt einen anwendungsspezifischen Parametersatz 5, der aus einer Adaption mit einer vorgegebenen Stichprobe ermittelt worden ist, die in der Regel mehrere tausend Sendungen umfaßt. Das Lesesystem wird nach dieser Adaption landesweit in den postalischen Verteilzentren eingesetzt. Die dort täglich angetroffenen Sendungen können sich erheblich von den Sendungen unterscheiden, mit denen das System optimiert worden ist; zudem können sich Sendungseigenschaften mit der Zeit signifikant so ändern, daß das Lesesystem nur noch suboptimal arbeitet.

Das beschriebene Verfahren optimiert den Leser 40 ständig und automatisch an die räumlichen Besonderheiten der Adreßleseaufgabe und an mögliche zeitliche Veränderungen; damit werden die Schwächen bisheriger "statischer" Adreßleser kompensiert. Ausgangspunkt ist der Leser L₀, charakterisiert durch die Ausgangsparameter P₀ zum Zeitpunkt T = t₀. Mit fortschreitender Zeit werden bei Bedarf die Parametersätze neu adaptiert, und es entstehen Inkarnationen von neuen Lesern. Die Leseraten eines neu adaptierten Lesesystems Lᵢ und des Vorgängersystems Lᵢ₋₁ werden anhand einer Verifikationsstichprobe ermittelt. Nur bei Verbesserung wird Lᵢ verwendet, ansonsten der bisherige Leser.

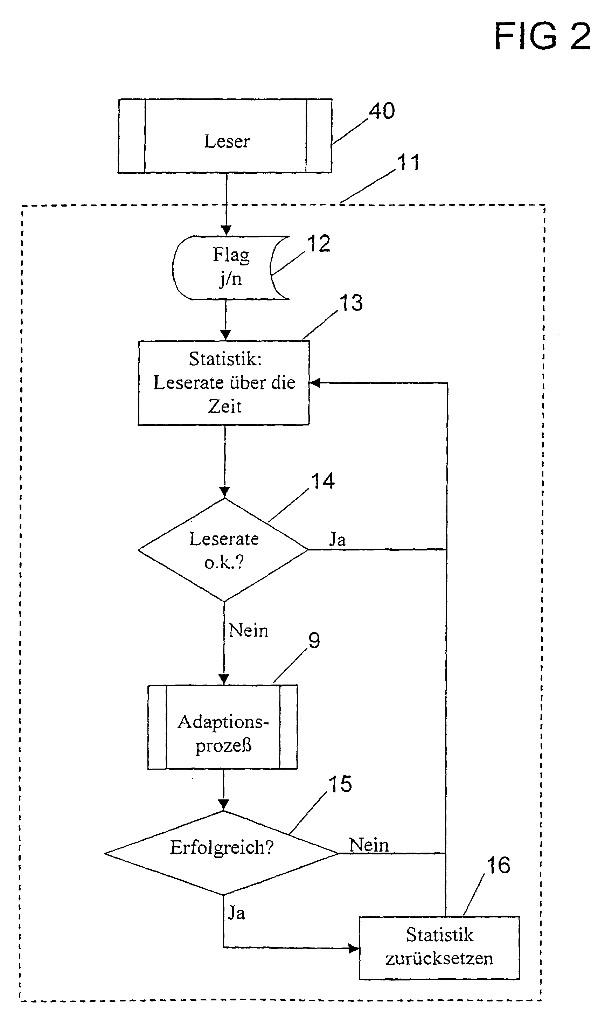

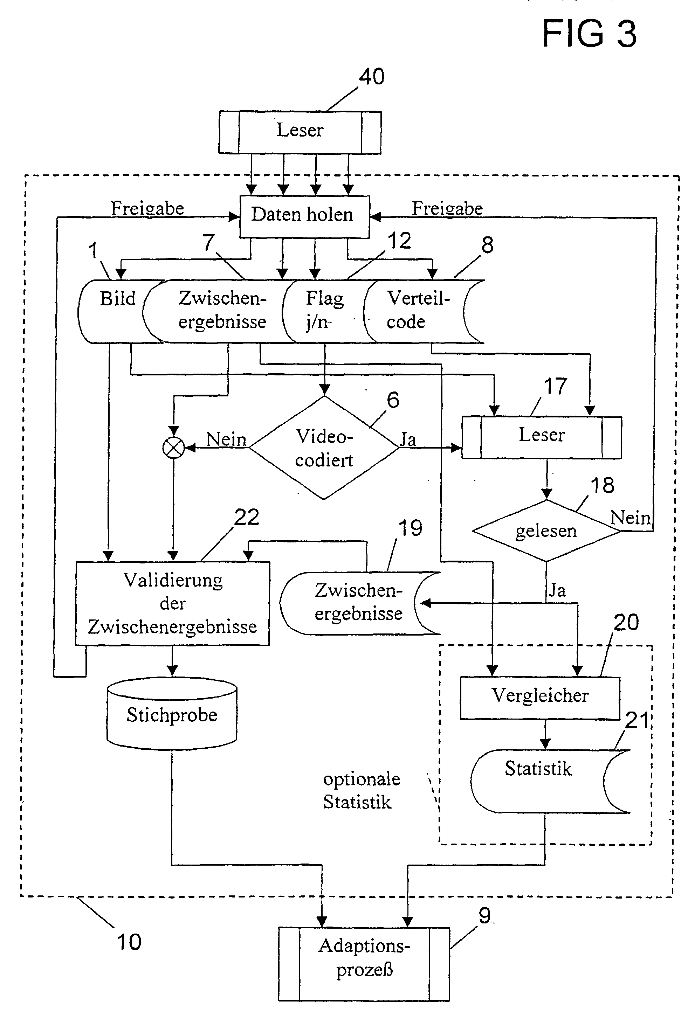

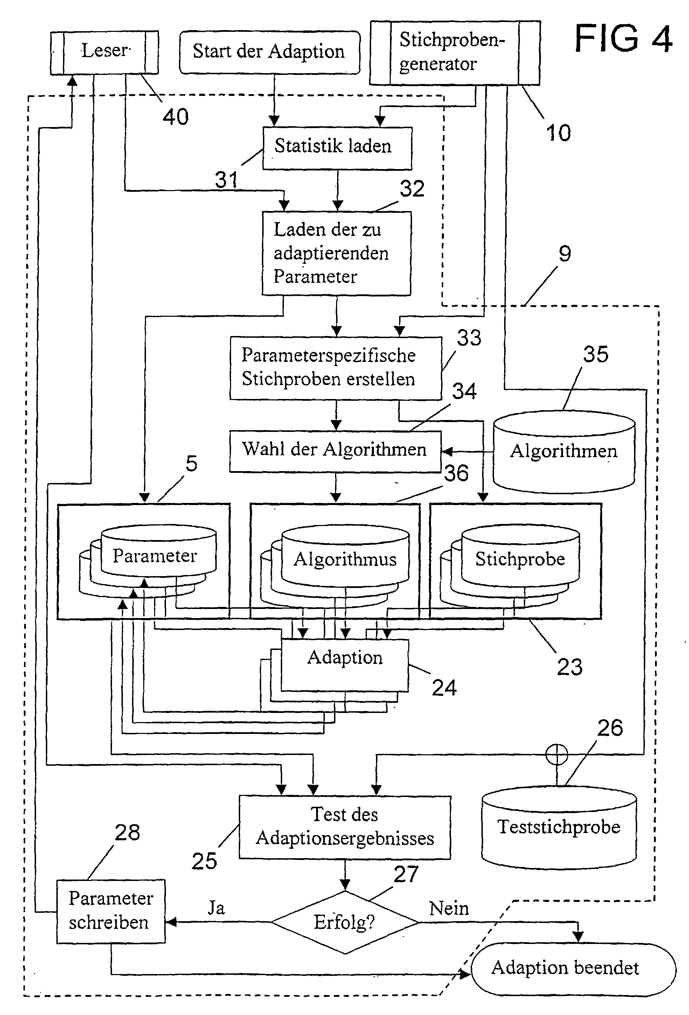

Das Verfahren beinhaltet den an sich bekannten Leser 40 (FIG 1), einen Monitorprozeß 11 (FIG 2), einen Stichprobengenerator 10 (FIG 3) und einen Adaptionsprozeß 9 (FIG 4).

Der Leser 40 realisiert wie im Stand der Technik bereits beschrieben, die Verfahrensschritte Layoutanalyse 2, Klassifikation 3 und Adreßinterpretation 4. Die Eingabe in den Leser 40 besteht aus dem Bild 1 einer Sendung 1, das über die Verfahrensschritte mit dem Ziel analysiert wird, aus den für die Verteilung relevanten Informationen den Verteilcode 8 abzuleiten. Hierzu wird das Sendungsbild 1 bei der Layoutanalyse 2 in informationstragende und unrelevante Bereiche zerlegt. Die informationstragenden Bereiche werden weiter in ihre kleinsten informationstragenden Einheiten zerlegt. Diese sind bei Blockschrift die einzelnen Zeichen und bei gebundener Schrift Wörter. Diese Einheiten werden mit entsprechenden Klassifikatoren klassifiziert 3 und die Klassifikationsergebnisse den Bereichen zugeordnet. Alle Bereiche mit ihren identifizierenden Merkmalen (Geometrie, Lage, Orientierung, Klassifikationsergebnisse) werden in einem außerhalb des Moduls gelegenen Speicher abgelegt. Aus diesen Zwischenergebnissen 7 ermittelt die Adreßinterpretation 4 den wahrscheinlichsten Eintrag aus dem Wörterbuch, das alle gültigen Adressen enthält und zum Parametersatz der Adreßinterpretation 4 gehört. Für den gefundenen Wörterbucheintrag wird aus einer Tabelle der Verteilcode ausgelesen und beispielsweise an eine Maschinensteuerung einer Sortiermaschine weitergegeben, die dann dafür sorgt, daß die Sendung im richtigen Sortierfach landet. Kann kein wahrscheinlicher Wörterbucheintrag gefunden werden, geht das Sendungsbild 1 an die Videocodierung 6, wo ein Mensch die verteilrelevanten Informationen in das System eingibt. Die Maschinensteuerung liegt außerhalb des Lesers 40 und ist auf den Figuren nicht enthalten.

Der Monitorprozeß 11 hat die Aurgabe, eine Leserate über die Zeit zu ermitteln 13 und bekommt hierzu vom Leser 40 mit einem Flag 12 mitgeteilt, ob die bearbeitete Sendung automatisch gelesen werden konnte oder nicht. Er überwacht die Leserate ständig 14, stößt bei einem signifikanten Absinken der Leserate einen Adaptionsprozeß 9 an und wartet auf seine Beendigung. Bei der Beendigung des Adaptionsprozesses 9 teilt dieser dem Monitorprozeß mit, ob die Adaption erfolgreich war oder nicht 15. Eine Adaption ist dann erfolgreich, wenn durch sie eine Verbesserung des Lesers 40 erreicht wird. Bei einer erfolgreichen Adaption wird die Statistik zurückgesetzt 16, d.h. mit der Berechnung der Leserate wird neu begonnen. Als Startwert wird die Leserate verwendet, die das adaptierte System auf der Teststichprobe erreicht hat. Nach einer erfolglosen Adaption oder nach dem Zurücksetzen der Statistik wird die Beobachtung der Leserate fortgesetzt.

Der Stichprobengenerator 10 ist in der FIG 3 dargestellt und bildet eines der neuen Kernmodule. Er hat die Aufgabe, aus den Leseergebnissen des Lesers 40, dem Sendungsbild 1 und ggf. der Videocodiereingabe 6 Stichproben zu generieren, die sich zur Adaption des Lesers 40 eignen. Um diese Aufgabe wahrnehmen zu können, hat der Stichprobengenerator 10 die Möglichkeit, das Sendungsbild 1, die Zwischenergebnisse 7, das Flag 12, ob die Sendung videocodiert wurde oder nicht und den Verteilcode 8 aus dem Leser 40 auszulesen.

Als erster Schritt wird überprüft, ob die aktuell zu bearbeitende Sendung videocodiert wurde oder nicht 6. Bei videocodierten Sendungen sind die Zwischenergebnisse unvollständig oder falsch. Da aber aus ihnen die Stichprobe generiert wird und man gerade aus Fehlern am meisten lernen kann, haben diese Sendungsbilder einen besonders hohen Stellenwert. Deshalb lohnt es sich, die vollständigen Zwischenergebnisse auch mit einem relativ hohen Aufwand zu erzeugen. Je mehr Zwischenergebnisse von videocodierten Sendungen erzeugt werden können, desto größere Verbesserungen kann man von einer Adaption erwarten. Die Berechnung der Zwischenergebnisse von videocodierten Sendungen erfolgt durch einen weiteren Leser 17 gleicher Funktionalität. Der Unterschied liegt vor allem in einem durch den Verteilcode aus der Videocodierung eingeschränktem Wörterbuch. Optional kann dieser Leser 17 auch so eingestellt werden, daß er den gesamten Suchraum nach der richtigen Lösung durchsucht, indem die Beschränkungen, vor allem für die Laufzeit pro Sendung, aufgehoben wird. Dadurch wird der Leser 17 in die Lage versetzt, viele Sendungen automatisch zu lesen, die er zuvor nicht lesen konnte.

Kann eine Sendung trotz Videocodierung beim zweiten Mal nicht automatisch gelesen werden 18, wird sie für die aktuelle Stichprobe verworfen oder in einer Problemstichprobe gesammelt und der Stichprobengenerator 10 holt sich die nächste Sendung. Optional kann aber ein weitergehender Videocodierdialog eingebunden werden, bei dem jeder Zwischenschritt von einem Menschen videocodiert werden kann. Dann können die Zwischenergebnisse von noch mehr Sendungen erzeugt werden und somit eine noch größere Verbesserung bei der Adaption erwartet werden. Aus Kostengründen ist aber ein solcher Videocodierdialog nicht immer sinnvoll.

Die erzeugten Zwischenergebnisse 19 können nun mit den Zwischenergebnissen 7 aus dem Lesesystem verglichen werden. Hierbei werden die Ergebnisse der Zwischenschritte in der Verfahrensreihenfolge miteinander verglichen (20). Bei der ersten signifikanten Abweichung zwischen den Ergebnissen, kann daraus geschlossen werden, daß das korrespondierende Systemmodul einen Fehler gemacht hat. Weiterhin kann aus diesem Vergleich beobachtet werden, welche frühen Fehler sich wie stark auf nachfolgende Systemmodule auswirken. Diese Statistik 21 gibt wichtige Hinweise auf Systemschwachpunkte.

Unabhängig davon, ob die vollständigen Zwischenergebnisse vom zweiten Leser 17 erzeugt wurden oder vom Leser 40 stammen, gehen sie in einen Validierungsprozeß 22, bevor sie in die Stichprobe 23 aufgenommen werden. Dieser Prozeß hat die Aufgabe, aus den Zwischenergebnissen jene Alternativen als Sollergebnis auszuwählen, die dem Sendungsaufdruck entsprechen. Dieser Schritt ist nötig, weil die Adreßinterpretation fehlertolerant arbeitet und z.B. Tippfehler in der Anschrift, fehlerhafte Klassifikationsergebnisse auf einzelnen Zeichen, usw. ausgleicht und trotzdem die richtige Adresse findet. Trägt z.B. ein Brief die Anschrift "78467 Komstanz", so kann man aufgrund der Postleitzahl und der Nähe von m zu n sowie der Übereinstimmung der anderen Buchstaben mit Konstanz schließen, daß es sich um einen Brief nach Konstanz handelt. So darf das m aus Komstanz für die Einzelzeichenklassifikation auf keinen Fall das Sollergebnis n zugeordnet bekommen, obwohl die Sollkennung für die Adreßinterpretation Konstanz ist. Da das automatische Validierungsverfahren auf jede menschliche Mithilfe verzichten muß, gibt es keine absolute Sicherheit über die tatsächlich richtigen Zeichen auf dem Brief. Um falsche Sollergebnisse zu vermeiden, wird das Sollergebnis der Adreßinterpretation übernommen, mit der Ausnahme von solchen Stellen, an denen die vorgeschalteten Zwischenschritte stark von dem Sollergebnis abweichen. Dort werden drei Fälle unterschieden:
1. Im ersten Fall empfiehlt der vorgeschaltete Zwischenschritt mit hoher Sicherheit ein anderes Ergebnis. In diesem Fall wird das Ergebnis des Zwischenschritts als Sollergebnis für diesen Zwischenschritt übernommen.
2. Im zweiten Fall liefert der vorgeschaltete Zwischenschritt eine Liste von Alternativen und das Sollergebnis der Adreßinterpretation ist in dieser Liste enthalten. Dann wird das Sollergebnis der Adreßinterpretation als Sollergebnis für diesen Zwischenschritt übernommen.
3. Der dritte Fall entspricht dem zweiten, mit der Ausnahme, daß das Sollergebnis der Adreßinterpretation nicht in der Alternativenliste enthalten ist. In diesem Fall wird kein Sollergebnis für diesen Zwischenschritt generiert, um ein falsches Sollergebnis zu vermeiden.

Die so validierten Bilder und Zwischenergebnisse 22 werden in der Stichprobe 23 abgelegt. Die Stichprobe enthält den Bilddaten zugeordnete Lese- und Zwischenergebnisse und kann auf verschiedene Art organisiert sein:
1. Die Stichprobe beinhaltet eine Ansammlung von Zwischenergebnissen.
2. Die Stichprobe beinhaltet jeweils eine Datei für die Zwischenschritte, d.h. die Zwischenergebnisse für den Leser 40 werden in die Zwischenergebnisse der einzelnen Zwischenschritte zerlegt.
3. Unabhängig von 1. und 2. wird die Stichprobe in die zwei Fälle "automatisch gelesen" und "videocodiert" aufgespaltet.
4. Unabhängig von 1. bis 3., ist die mögliche Größe der Stichprobe begrenzt. Deswegen werden, wenn die maximale Größe erreicht ist, die ältesten Stichprobenelemente von neuen überschrieben.

Für welche Organisationsform man sich entscheidet, hängt ab von den Zielen, die man mit der Stichprobe verfolgt, und von der Art wie der Adaptionsprozeß auf die Stichprobe zugreift.

In FIG 4 ist der Adaptionsprozeß 9, wie er von dem Monitorprozeß 11 angestoßen wird, abgebildet. Er versucht zunächst die Statistik aus dem Stichprobengenerator zu laden 31. Kann dies erfolgen, so ist es möglich, aus Effizienzgründen die Wahl der zu adaptierenden Zwischenschritte auf jene zu beschränken, die am meisten zu einer Rückweisung beigetragen haben und somit die schwächsten Glieder in der Verarbeitungskette sind. D.h. eine Verbesserung dieser Module führt zur größten Verbesserung des Lesesystems. Kann keine Statistik geladen werden, so werden alle Zwischenschritte adaptiert.

Als nächstes werden die Parameter 5 der zu adaptierenden Module aus dem Lesesystem geladen 32 und für den Adaptionsprozeß abgelegt. Danach werden die zwischenschrittspezifischen bzw. die parameterspezifischen Stichproben aus der Stichprobe im Stichprobengenerator erstellt 33. Dieser Schritt kann von einer geeigneten Stichprobenorganisation im Stichprobengenerator 10 profitieren. Im nächsten Schritt werden die Adaptionsalgorithmen 35 aus einer Algorithmensammlung ausgewählt 34. Neben den eigentlichen Algorithmen sind hier Voraussetzungen an die Stichprobe, Laufzeit, Speicherbedarf usw. abgelegt.

Sind alle Voraussetzungen erfüllt, kann die Stichprobe für den Parametersatz neu angepaßt werden oder eine Adaptionsreihenfolge unter den Parametern berechnet werden.

Im nächsten Schritt werden die Adaptionen 24 der einzelnen Parameter 5 mit dem gewählten jeweiligen Algorithmus 36 und der erzeugten Stichprobe 23 gestartet und das erzielte Adaptionsergebnis wird getestet 25. Hierzu wird eine Teststichprobe 26 benötigt, die entweder immer gleich bleibt und mit dem System ausgeliefert wurde oder auch vom Stichprobengenerator 10 erzeugt wurde. Diese Teststichprobe 26 wird einmal durch einen Leser mit der Konfiguration vor der Adaption und einmal mit der Konfiguration nach der Adaption bearbeitet und die Leseergebnisse verglichen 25. Ist der adaptierte Leser besser, so werden die Parameter in den Leser 40 geschrieben 28, wo sie bei der nächsten Initialisierung geladen werden. Danach wird der Adaptionsprozeß 9 beendet und gibt an den Monitorprozeß 11 zurück, ob die Adaption erfolgreich war oder nicht.

Das dargestellte Verfahren läßt sich auch besonders vorteilhaft bei zu lesenden Sendungen von Großkunden anwenden, die stapelweise angeliefert werden. Die zu lesenden Adressen weisen starke Gemeinsamkeiten auf, z.B. einheitliches Schriftbild, gleiche örtliche Anordnungen auf der Sendung. Wird jede gelesene Sendung in der Stichprobe berücksichtigt, so können sich Änderungen in den Sendungs- und Bildeigenschaften sofort in Änderungen der Parameter auswirken.

## Patentansprüche

1. Verfahren zum Lesen von Dokumenteintragungen und Adressen mit den Verfahrensschritten
- Aufnehmen eines Abbildes der die zu lesenden Informationenenthaltenden Oberfläche der Dokumente oder Sendungen,
- automatisches Lesen der Informationen in einem Leser mit den Zwischenschritten
• Layout-Analyse mit
Bestimmen der die zu lesenden Informationen enthaltenden Gebiete (ROI),
Segmentieren in die zu klassifizierenden Bereiche, z.B. Zeilen, Wörter und Einzelzeichen,
• Klassifizieren der segmentierten Bereiche,
• Interpretation der Ergebnisse aus vorangegangenen Schritten,
wobei Zwischenergebnisse abgreifbar für die nachfolgenden Zwischenschritte solange gespeichert werden, bis ein neues Bild gelesen wird,
- Videocodieren des betreffenden Abbildes bei nicht in vorgegebener Zeitspanne automatisch ermitteltem, eindeutigem Leseergebnis,
wobei die automatischen Leseschritte in einer vorgelagerten Adaptionsphase anhand einer Stichprobe, bestehend aus den Bildern mit den zu lesenden Informationen und den dazugehörigen Soll-Leseergebnissen mit ihren Zwischenergebnissen, optimiert werden,
**dadurch gekennzeichnet, daß** während des Lesebetriebes bei eindeutig automatisch gelesenen Informationen von ausgewählten Bildern die den Bilddaten des jeweiligen Bildes zugeordneten Lese- und Zwischenergebnisse für eine aktuelle Stichprobe gespeichert werden und/oder bei mit Hilfe der Videocodierung eindeutig ermittelten Informationen der ausgewählten Bilder die Bilddaten unter Einbeziehung der zugehörigen, durch Videocodierung ermittelten Informationen in einem zweiten automatischen Leseprozeß gleicher Funktionalität noch einmal gelesen werden und im Falle eines eindeutigen Leseergebnisses die Lese- und Zwischenergebnisse den zugehörigen Bilddaten zugeordnet ebenfalls für die aktuelle Stichprobe gespeichert werden, und daß mit der aktuellen Stichprobe der automatische Leser neu adaptiert wird.

2. Verfahren nach Anspruch 1, **dadurch gekennzeichnet, daß** der Leseprozeß beim zweiten automatischen Lesen ohne Zeitbeschränkungen durchgeführt wird.

3. Verfahren nach Anspruch 1, **dadurch gekennzeichnet, daß** infolge von Inkonsistenzen ungeeignete Lese- und Zwischenergebnisse ermittelt und nicht in die Stichprobe aufgenommen werden.

4. Verfahren nach Anspruch 1, **dadurch gekennzeichnet, daß** für jedes erfolgreich mithilfe des Videocodierens gelesene Bild die Zwischenergebnisse beim ersten automatischen Lesen mit den dazugehörigen Zwischenergebnissen beim zweiten automatischen Lesen verglichen werden und signifikante Abweichungen als Auswertefehler in den jeweiligen Zwischenschritten beim ersten automatischen Lesen zu einer Statistik, z.B. über die Fehlerhäufigkeit aufsummiert werden.

5. Verfahren nach Anspruch 4, **dadurch gekennzeichnet, daß** nur die Zwischenschritte neu adaptiert werden, deren ermittelte Fehlerhäufigkeit während einer bestimmten Zeitspanne über einem festgelegten Wert liegt.

6. Verfahren nach einem der Ansprüche 1 bis 5, **dadurch gekennzeichnet, daß** die Leserate beim ersten automatischen Lesen überwacht wird, und wenn die Leserate über einen festgelegten Zeitraum unter einem bestimmten Schwellwert liegt, der Leser oder die Zwischenschritte mit der aktuellen Stichprobe neu adaptiert werden.

7. Verfahren nach einem der Ansprüche 1 bis 6, **dadurch gekennzeichnet, daß** die Leserate an einem automatischen Leser gleicher Funktionalität über eine Stichprobe mit den vorherigen und neu adaptierten Parametern ermittelt wird und bei einer Verbesserung der Leserate durch die neu adaptierten Parameter der automatische Leser neu initialisiert wird.

8. Verfahren nach Anspruch 1, **dadurch gekennzeichnet, daß** die in die Stichprobe aufzunehmenden Bilder so ausgewählt werden, daß die Stichprobe in einer festgelegten Zeitspanne eine bestimmte Anzahl neu gelesener Bilder mit eindeutig gelesenen Informationen enthält.

9. Verfahren nach Anspruch 1, **dadurch gekennzeichnet, daß** die in die Stichprobe aufzunehmenden Bilder so ausgewählt werden, daß die Stichprobe ein festgelegtes Verhältnis von automatisch gelesenen und videocodierten Bildern enthält.

10. Verfahren nach Anspruch 1, **dadurch gekennzeichnet, daß** die Stichprobendaten der ausgewählten, aktuell gelesenen Bilder in die ursprüngliche Stichprobe eingefügt werden und bei Überschreiten einer maximalen Anzahl von Stichprobenelementen die jeweils ältesten Elemente entfernt werden.

11. Verfahren nach Anspruch 1, **dadurch gekennzeichnet, daß** die ursprüngliche Stichprobe durch eine aktuelle Stichprobe ersetzt wird.

## Claims

1. Method for reading document entries and addresses using the following method steps
- an image of the surface of the documents or dispatches which contains the information to be read is recorded,
- the information is automatically read in a reader using the following intermediate steps
• layout analysis with
determination of the regions (ROI) which contain the information to be read,
segmentation into the areas which are to be classified, e.g. lines, words and individual characters,
• classification of the segmented regions,
• interpretation of the results from the preceding steps,
with intermediate results being stored, such that they can be picked off for the subsequent intermediate steps, until a new image is read,
- the image in question is video coded if a clear reading result has not been automatically ascertained within a prescribed time period,
the automatic reading steps being optimized in an upstream adaptation phase using a random sample, comprising the images with the information to be read and the associated desired reading results with their intermediate results,
**characterized in that**, during the reading mode, when information from selected images has been clearly read automatically, the reading results and intermediate results associated with the image data of the respective image are stored for a current random sample, and/or, when information from the selected images has been clearly ascertained using video coding, the image data are read once again in a second automatic reading process, having the same functionality, and the associated information ascertained by video coding is included, and in the case of a clear reading result, the reading results and intermediate results are likewise stored, assigned to the associated image data, for the current random sample, and **in that** the current random sample is used to readapt the automatic reader.

2. Method according to Claim 1, **characterized in that** the reading process for the second automatic reading is carried out with no time limitations.

3. Method according to Claim 1, **characterized in that** inconsistencies mean that unsuitable reading results and intermediate results are ascertained and are not included in the random sample.

4. Method according to Claim 1, **characterized in that**, for each image read successfully using video coding, the intermediate results for the first automatic reading are compared with the associated intermediate results for the second automatic reading, and significant discrepancies are summed as evaluation errors in the respective intermediate steps during the first automatic reading to form a statistic, e.g. relating to the frequency of error.

5. Method according to Claim 4, **characterized in that** only the intermediate steps whose ascertained frequency of error is above a stipulated value during a particular time period are readapted.

6. Method according to one of Claims 1 to 5, **characterized in that** the reading rate for the first automatic reading is monitored, and if the reading rate is below a particular threshold value over a stipulated time period, the reader or the intermediate steps are readapted using the current random sample.

7. Method according to one of Claims 1 to 6, **characterized in that** the reading rate is ascertained on an automatic reader having the same functionality using a random sample in the case of the previous and the readapted parameters, and if the reading rate is improved by the readapted parameters, the automatic reader is reinitialized.

8. Method according to Claim 1, **characterized in that** the images to be included in the random sample are selected such that the random sample contains a particular number of newly read images having clearly read information within a stipulated time period.

9. Method according to Claim 1, **characterized in that** the images to be included in the random sample are selected such that the random sample contains a stipulated ratio of automatically read images and video coded images.

10. Method according to Claim 1, **characterized in that** the random sample data for the selected, currently read images are inserted into the original random sample, and if a maximum number of random sample elements is exceeded, the oldest elements in each case are removed.

11. Method according to Claim 1, **characterized in that** the original random sample is replaced by a current random sample.

## Revendications

1. Procédé pour la lecture d'entrées de documents et d'adresses ayant les étapes de procédé suivantes :
- enregistrement d'une reproduction de la surface, contenant les informations à lire, des documents ou des envois,
- lecture automatique des informations dans un lecteur ayant les étapes intermédiaires suivantes :
• analyse de support avec
détermination des régions (ROI) contenant les informations à lire,
segmentation en zones à classer, par exemple lignes, mots et caractères isolés,
• classification des zones segmentées,
• interprétation des résultats des étapes précédentes,
les étapes intermédiaires étant mémorisées, de manière à être accessibles des étapes intermédiaires suivantes, jusqu'à ce qu'une nouvelle image soit lue,
- codage vidéo de la reproduction concernée si un résultat de lecture n'a pas pu être déterminé sans équivoque dans un intervalle de temps prédéterminé,
les étapes de lecture automatique étant optimisées dans une phase d'adaptation antérieure à l'aide d'un échantillon constitué des images avec les informations à lire et avec les résultats de lecture de consigne associés avec leurs résultats intermédiaires,
**caractérisé par le fait que**, pendant le fonctionnement de lecture, en cas d'informations lues automatiquement sans équivoque pour des images sélectionnées, les résultats de lecture et résultats intermédiaires associés aux données de l'image respective sont mémorisés pour un échantillon actuel et/ou, en cas d'informations déterminées sans équivoque à l'aide du codage vidéo pour les images sélectionnées, les données d'image sont lues encore une fois, en incluant les informations associées déterminées par le codage vidéo, dans un deuxième processus de lecture automatique de même fonctionnalité et, dans le cas d'un résultat de lecture sans équivoque, les résultats de lecture et résultats intermédiaires sont également mémorisés, associés aux données d'image correspondantes, pour l'échantillon actuel, et que le lecteur automatique est réadapté avec l'échantillon actuel.

2. Procédé selon la revendication 1, **caractérisé par le fait que**, lors de la deuxième lecture automatique, on exécute le processus de lecture sans limitation dans le temps.

3. Procédé selon la revendication 1, **caractérisé par le fait qu'**on détermine des résultats de lecture et résultats intermédiaires inappropriés en raison d'inconsistances et on ne les prend pas dans l'échantillon.

4. Procédé selon la revendication 1, **caractérisé par le fait que**, pour chaque image lue avec succès à l'aide du codage vidéo, on compare les résultats intermédiaires lors de la première lecture automatique aux résultats intermédiaires associés lors de la deuxième lecture automatique et on cumule des écarts significatifs comme erreurs d'évaluation dans les étapes intermédiaires respectives lors de la première lecture automatique en une statistique par exemple sur la fréquence d'erreurs.

5. Procédé selon la revendication 4, **caractérisé par le fait qu'**on ne réadapte que les étapes intermédiaires dont la fréquence d'erreurs déterminée pendant un intervalle de temps déterminé est supérieure à une valeur fixée.

6. Procédé selon l'une des revendications 1 à 5, **caractérisé par le fait qu'**on surveille le taux de lecture lors de la première lecture automatique et, si le taux de lecture pendant un intervalle de temps fixé est inférieur à un seul déterminé, on réadapte le lecteur ou les étapes intermédiaires avec l'échantillon actuel.

7. Procédé selon l'une des revendications 1 à 6, **caractérisé par le fait qu'**on détermine le taux de lecture pour un lecteur automatique de même fonctionnalité sur un échantillon d'une part avec les paramètres précédents et d'autre part avec les paramètres réadaptés et, en cas d'amélioration du taux de lecture par les paramètres réadaptés, on réinitialise le lecteur automatique.

8. Procédé selon la revendication 1, **caractérisé par le fait qu'**on sélectionne les images à prendre dans l'échantillon de telle sorte que l'échantillon contient dans un intervalle de temps fixé un certain nombre de nouvelles images lues avec des informations lues sans équivoque.

9. Procédé selon la revendication 1, **caractérisé par le fait qu'**on sélectionne les images à prendre dans l'échantillon de telle sorte que l'échantillon contient un rapport fixé d'images lues automatiquement et d'images lues par codage vidéo.

10. Procédé selon la revendication 1, **caractérisé par le fait qu'**on insère les données d'échantillon des images sélectionnées actuellement lues dans l'échantillon initial et, en cas de dépassement d'un nombre maximal d'éléments d'échantillon, on supprime les éléments à chaque fois les plus anciens.

11. Procédé selon la revendication 1, **caractérisé par le fait qu'**on remplace l'échantillon initial par un échantillon actuel.
